# EUROPÄISCHE PATENTSCHRIFT

(11) **EP 1 219 508 B1**
(45) Veröffentlichungstag und Bekanntmachung des Hinweises auf die Patenterteilung: **20.07.2005**
(21) Anmeldenummer: 01130900.2
(22) Anmeldetag: 27.12.2001
(51) Int. Cl.: B60R 21/24, B60R 21/16

(54) **Gassackmodul**
Airbag module
Module de sac gonflable

(30) Priorität: 28.12.2000 DE 20022020 U
(43) Veröffentlichungstag der Anmeldung: 03.07.2002
(73) Patentinhaber: TRW Automotive Safety Systems GmbH, 63743 Aschaffenburg (DE)
(72) Erfinder: Neupert, Ralph, 63839 Kleinwallstadt (DE)
(74) Vertreter: Kitzhofer, Thomas, Dipl.-Ing.

(56) Entgegenhaltungen:
- DE-A- 3 630 685
- DE-U- 20 010 726
- US-A- 5 887 894

## Beschreibung

Die Erfindung betrifft ein Gassackmodul, mit einem Gassack, wobei die Außenkontur des Gassacks durch eine Gassackwand gebildet ist, die eine Vorderwand zum Aufprall des Insassen und eine von der Vorderwand ausgehende Einbuchtung hat, welche dadurch gebildet ist, daß ein Zentrumsabschnitt der Gassackwand beim Aufblasen an einer freien Bewegung gehindert und zurückgehalten wird, wobei der Gassack um die Einbuchtung herum eine ringförmige, mit Gas zu befüllende Kammer aufweist.

Ein derartiges Gassackmodul ist aus DE 36 30 685 A bekannt.

Bei derartigen ringförmigen Gassäcken ist der Zentrumsabschnitt an einer freien oder sogar jeglichen Bewegung in Richtung zum Insassen gehindert, indem er am Modul befestigt bleibt. Die Rückhaltung erfolgt über die ringförmige Vorderwand um die Einbuchtung herum.

Die Erfindung schafft ein Gassackmodul, bei dem die Einbuchtung wenigstens teilweise, vorzugsweise vollständig geschlossen wird. Dies wird bei einem Gassackmodul der eingangs genannten Art dadurch erreicht, daß wenigstens ein Fangband nahe des Übergangs von der Vorderwand zur Einbuchtung an der Gassackwand angreift, sich im wesentlichen längs der Einbuchtung erstreckt und die Tiefe der Einbuchtung festlegt. Während bei bislang bekannten Gassäcken die Einbuchtung selbst die Tiefe des Gassacks festlegt, ist beim erfindungsgemäßen Modul nahe der Einbuchtung ein Fangband vorgesehen, das eine Tiefenbegrenzung der Einbuchtung bildet. Das bedeutet, der vom Fangband überbrückte Abschnitt der Gassackwand ist länger als das Fangband selbst, so daß das Fangband und nicht die Gassackwand im Bereich der Einbuchtung die Tiefe derselben festlegt. Die Gassackwand, die die Einbuchtung definiert, wird damit aber im aufgeblasenen Zustand in die Einbuchtung ausbauchen, so daß die Einbuchtung einen geringeren Öffnungsquerschnitt aufweist als ohne ein entsprechendes Fangband bei ansonsten gleichen Geometrien des Gassackgewebes. Unter "vollständig verschlossen" ist natürlich nicht ein gasdichtes Verschließen zu verstehen. Vielmehr werden Abschnitte der Gassackwand aneinandergedrückt, so daß keine mehrere Quadratzentimeter große Öffnung verbleibt, sondern allenfalls minimale, wenige Quadratmillimeter große Öffnungen.

Vorzugsweise baucht der die Einbuchtung definierende Teil der Gassackwand sogar so weit aus, daß Abschnitte der Gassackwand einander berühren, vorzugsweise gegenüberliegende Abschnitte.

Durch die Erfindung ist es möglich, daß Abschnitte der die Einbuchtung definierenden Gassackwand so aneinander anliegen, daß die Einbuchtung im wesentlichen geschlossen wird.

Dieses Schließen der Einbuchtung erfolgt vorzugsweise nahe des Übergangs von Einbuchtung zu Vorderwand, was durch eine angemessene Abstimmung der Länge des Fangbandes mit der Tiefe der Gassackwand, die die Einbuchtung bildet, erreicht werden kann.

Gemäß einer Ausgestaltung der Erfindung ist das Fangband an der Vorderwand oder dem die Einbuchtung definierenden Teil der Gassackwand befestigt.

Diese Befestigung kann u.a. folgendermaßen erfolgen: Die die Vorderwand und die die Einbuchtung definierende Gassackwand sind vorzugsweise aus miteinander vernähten Gewebelagen. Das Fangband ist an der Naht, mit der die Gewebelagen der Vorderwand und der Einbuchtung verbunden sind, am Gassack befestigt, so daß mit einer Naht drei Teile miteinander verbunden werden, und zwar die Gewebelagen für die Vorderwand und die Einbuchtung und das Fangband.

Gemäß einer anderen Ausführungsform, bei der ebenfalls Vorderwand und Einbuchtung aus verschiedenen Gewebelagen bestehen, hat die Gewebelage der Vorderwand zur Bildung des Übergangs zur Einbuchtung eine Öffnung. Wenigstens ein in die Öffnung ragender Gewebelappen der Gewebelage der Vorderwand ist zur Befestigung des Fangbandes vorgesehen. Diese Ausführung kann beispielsweise dadurch umgesetzt werden, daß in die Gewebelage der Vorderwand ein U-förmiger Schlitz gestanzt wird, wobei das "U" den Gewebelappen umschreibt.

Die bevorzugte Ausführungsform sieht vor, daß mehrere Fangbänder vorgesehen sind, die an der Vorderwand befestigt sind und deren Befestigungsstellen an der Vorderwand im aufgeblasenen Zustand des Gassacks im wesentlichen eine Ebene definieren. Der Abschnitt der Gassackwand, der einwärts der Befestigungsstellen liegt, liegt im aufgeblasenen Zustand entweder in der Ebene oder ragt sogar aus der Ebene heraus, und zwar in Richtung zum Insassen, d.h. zur Einbuchtung entgegengesetzt. Das bedeutet, der Gassack hat keine trichterförmige Einbuchtung im Bereich des Übergangs von Vorderwand zur Einbuchtung, vielmehr präsentiert sich der Gassack zum Insassen als eine ebene, geschlossene Fläche, wobei aus der Ebene sogar noch eine Art Dom herausragen kann.

Das Schließen der Einbuchtung nahe der Vorderwand kann durch einen zweckmäßigen Zuschnitt der die Vorderwand definierenden Gewebelage noch unterstützt werden. Es hat sich herausgestellt, daß eine kreisrunde Öffnung diese Unterstützung weniger leistet als z.B. eine C-förmige, schlitzartige, rechteckige, dreiecksförmige oder ovale Öffnung. Auch eine kreuzförmige Öffnung oder eine T- oder H-förmige, schlitzartige Öffnung unterstützt das Schließen nahe der Vorderwand in geeigneter Weise. Diese verschiedenen Geometrien der Öffnung sind überrraschenderweise auch nicht beim Entfalten des Gassacks hinderlich. Beim Entfalten muß nämlich die Öffnung über eine ringförmige Austrittsöffnung in der Modulabdeckung an einem feststehenden Mittelteil entlang nach außen bewegt werden.

Das Fangband ist mit seinem dem Gassackmodul nahen Ende, bezogen auf den aufgeblasenen Zustand des Gassacks, am Zentrumsabschnitt befestigt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Querschnittsansicht durch ein erfindungsgemäßes Gassackmodul mit aufgeblasenem Gassack,
- Fig. 2 eine Querschnittsansicht durch eine andere Ausführungsform, bei der die Befestigung der Fangbänder detaillierter dargestellt ist,
- Fig. 3 eine Querschnittsansicht gemäß einer weiteren Ausführungsform, die die Anbindung der Fangbänder detaillierter zeigt,
- Fig. 4 eine Querschnittsansicht durch den Gassack gemäß einer vierten Ausführungsform mit einer weiteren Variante der Anbindung der Fangbänder,
- Fig. 5 eine Draufsicht auf die aufgeblasenen Gassäcke gemäß der Fig. 2 bis 4 und
- Fig. 6a bis 6f Draufsichten auf verschiedene Ausführungsformen des Gassacks gemäß dem erfindungsgemäßen Gassackmodul mit verschiedenen Zuschnitten der Vorderwand.

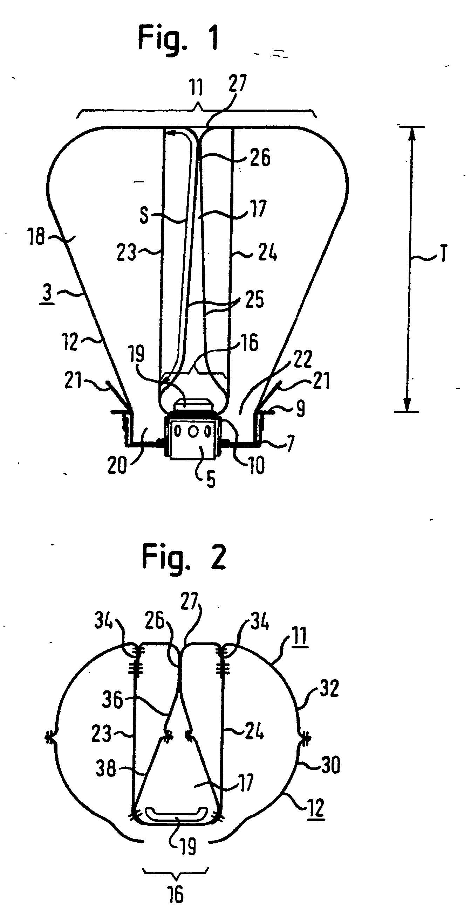

In Fig. 1 ist ein Gassackmodul dargestellt, das einen Gassack 3, einen Gasgenerator 5 und ein Modulgehäuse 7 mit einer Modulabdeckung 9 aufweist. Der Gasgenerator 5 wird von einem topf- oder glockenförmigen Diffusor 10 umgeben, der von oben über den Gasgenerator 5 gestülpt ist und am Modul, genauer am Modulgehäuse 7 befestigt ist.

Der Gassack hat eine die Außenkontur des Gassacks definierende Gassackwand, die mehrere Teile oder Abschnitte aufweist, unter anderem eine Vorderwand 11, die dem Insassen im aufgeblasenen Zustand zugewandt ist und ihn zurückhält, da der Insasse auf sie aufprallt. Darüber hinaus ist eine Rückwand 12 vorgesehen. Von der Vorderwand 11 aus erstreckt sich in der Mitte des Gassacks, also im Zentrum, eine Einbuchtung 17 in Richtung Gasgenerator 5. Die Einbuchtung 17 ist dadurch gebildet, daß ein Abschnitt der Gassackaußenwand, im folgenden Zentrumsabschnitt 16 genannt, an einer freien oder sogar an jeglicher Bewegung aus dem Modul heraus im Rückhaltefall gehindert wird. Dadurch entsteht eine ringförmige, aufzublasende, mit Gas zu befüllende Kammer 18, wobei die Einbuchtung 17 aber nicht mit dem Gas des Gasgenerators befüllt wird.

Die Modulabdeckung 9 weist einen scheibenförmigen Mittelteil 19 auf, der an den Zentrumsabschnitt 16 angrenzt und bleibend am Diffusor 10 befestigt ist. Zur Befestigung dieses Mittelteils 19 ist im Inneren des Mittelteils ein Verstärkungsblech vorgesehen, von dem Gewindebolzen abstehen, die durch den Zentrumsabschnitt 16 und den Diffusor 10 ragen, um von unten mit Muttern verschraubt zu werden. Der Zentrumsabschnitt 16 wird dadurch formschlüssig am Diffusor befestigt und auch kraftschlüssig zwischen dem Mittelteil 19 und dem Diffusor 10 geklemmt.

Der Gassack 3 ist im gefalteten Zustand in einem Ringraum 20 zwischen dem Diffusor 10 und einer Außenwand des Modulgehäuses 7 untergebracht. Die Abdeckung 9 hat darüber hinaus eine aus Segmenten zusammengesetzte ringförmige Klappe 21, die eine ringförmige Austrittsöffnung 22 im noch nicht aktivierten Zustand des Gasgenerators 5 abdeckt.

Im Inneren der Kammer 18 sind zwei in bezug auf die Einbuchtung 17 gegenüberliegende Fangbänder 23, 24 vorgesehen, die sich von der Vorderwand 11 aus bis zum Zentrumsabschnitt 16 erstrecken und an der Vorderwand 11 und am Zentrumsabschnitt 16 angenäht sind. Die Fangbänder 23, 24 sind kürzer als die Länge S des durch sie überbrückten Teils der Gassackwand 25, so daß die Fangbänder 23, 24 im aufgeblasenen Zustand, wie in Fig. 1 gezeigt, gespannt sind und die Tiefe T der Einbuchtung festlegen.

Durch die längs der Einbuchtung 17 verlaufenden Fangbänder 23, 24 kann der Teil der Gassackwand 25, der die Einbuchtung 17 definiert, so weit in Richtung der Einbuchtung 17 ausbauchen, daß sich Abschnitte 26 nahe des Übergangs 27 zwischen Vorderwand 11 und Einbuchtung 17 berühren, so daß die Einbuchtung von außen im wesentlichen vollständig geschlossen ist. Dadurch bietet sich für den Insassen eine im wesentlichen komplett geschlossene Rückhaltefläche.

Die Fig. 2 bis 4 beziehen sich insbesondere auf die Anbindung des Fangbands an der Gassackwand.

Bei der Ausführungsform nach Fig. 2 besteht der Gassack aus vier ringförmigen Gewebelagen. Eine erste Gewebelage 30 bildet vor allem die Rückwand 12. Eine zweite Gewebelage 32 bildet insbesondere die Vorderwand 11. Die Gewebelage 32 hat eine zentrische Öffnung, die dadurch gebildet ist, daß ein H-förmiger Schlitz in die Gewebelage 32 geschnitten wird. Es ergeben sich dadurch zwei im wesentlichen quadratische Gewebelappen 34, die im aufgeblasenen Zustand in Richtung zum Gasgenerator ragen und an denen jeweils ein Fangband 23, 24 angenäht ist. An den Rand der Öffnung in der Gewebelage 32 wird ebenfalls eine ringförmige Gewebelage 36 angenäht, so daß die Öffnung nach außen geschlossen ist. Die Gewebelage 36 bildet den oberen Teil der Einbuchtung 17. Eine Gewebelage 38, ebenfalls ringförmig, ist wiederum an den inneren Rand der Gewebelage 36 mit ihrem äußeren Rand angenäht. Die Gewebelage 38 erstreckt sich bis unter das Mittelteil 19 und beinhaltet den Zentrumsabschnitt 16. Die unteren Enden der Fangbänder 23, 24 sind im Bereich des Zentrumsabschnitts 16 an der Gewebelage 38 angenäht.

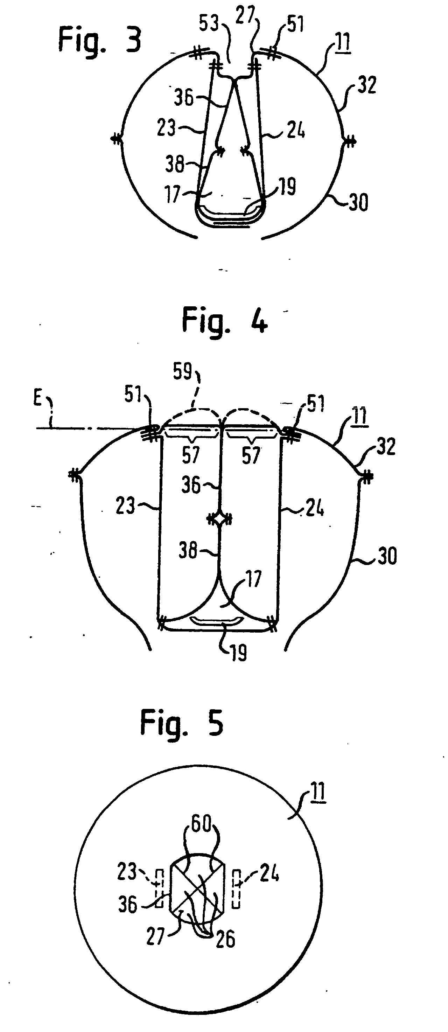

Im aufgeblasenen Zustand wird die Öffnung in der Gewebelage 32 dadurch geschlossen, daß die Gewebelage 36 radial nach innen und zum Teil auch nach oben ausbaucht, so daß Abschnitte 26 der Gewebelage 36 aneinander anliegen und die Einbuchtung 17 schließen, wie in Fig. 5 gezeigt ist. In Fig. 5 sind auch mit unterbrochenen Linien die Fangbänder 23, 24 dargestellt. Die Ausführungsformen nach den Fig. 3 und 4 entsprechen im wesentlichen der in Fig. 2 gezeigten Ausführungsform, so daß nur noch auf die Unterschiede eingegangen wird. Gemäß Fig. 3 hat die Gewebelage 32 eine ovale, rechteckige oder schlitzartige Öffnung, an deren Rand die Gewebelage 36 angenäht ist. Die Fangbänder 23, 24 sind dann mit Abstand von der umlaufenden Naht 51 an der Gewebelage 36 durch Nähen befestigt. Es ergibt sich durch diese Ausführungsform eine relativ geringe Einbuchtung 53 im Bereich der Vorderwand, die in Fig. 3 nur zur Verdeutlichung übertrieben tief dargestellt ist. Die Fangbänder 23, 24 erstrecken sich bis unter das Mittelteil 19 und überlappen sich in diesem Bereich vollständig und sind auch unterhalb des Mittelteils mit der Gewebelage 38 vernäht.

Bei der Ausführungsform nach Fig. 3 werden die Fangbänder 23, 24 somit an der die Einbuchtung 17 definierenden Gassackwand befestigt, aber immer noch unmittelbar am Übergang 27 von Vorderwand 11 zur Einbuchtung 17.

Bei der Ausführungsform nach Fig. 4 werden durch die umlaufende Naht 51 nicht nur die Gewebeabschnitte 32 und 36 miteinander vernäht, sondern zugleich werden auch die Fangbänder 23, 24 an die Gassackwand angenäht. Bei dieser Ausführungsform sind jedoch die Fangbänder 23, 24 einstückig unterhalb des Mittelteils 19 miteinander verbunden, d.h. es ist ein langer Gewebestreifen vorgesehen, dessen beide Enden die Fangbänder 23, 24 bilden. Bei dieser Ausführungsform kann die Einbuchtung 17 fast über die gesamte Tiefe T geschlossen werden, nachdem die Gassackwand nach innen so stark ausbauchen kann, daß Abschnitte der Gassackwand großflächig aneinander anliegen. Die ringförmige Vorderwand 11 wird dadurch komplett geschlossen. Die Besonderheit dabei ist, daß sich entgegen Fig. 3 keine Einbuchtung 53 bildet, vielmehr liegen die Abschnitte 57 der Gewebelage 36 im aufgeblasenen Zustand des Gassacks außerhalb einer Ebene E, die durch die Befestigungsstellen 51 der Fangbänder 23, 24 an der Vorderwand 11 definiert ist. Der Gassack im Bereich der Abschnitte 57 baucht somit in Richtung zum Insassen, in Richtung entgegengesetzt zur Einbuchtung 17 nach außen aus oder liegt in der Ebene E.

Die gezeigte Form läßt sich auch noch so erweitern, daß, wie in den unterbrochenen Linien gezeigt, ein umlaufender Wulst 59 gebildet werden kann. Mit Blick auf die Vorderwand 11 präsentiert sich für den Insassen der Gassack als geschlossene Aufschlagfläche, nur in der Mitte sind Falten 60 mit aneinander anliegenden Abschnitten 26 der Gassackwand, die die Einbuchtung definiert, zu sehen.

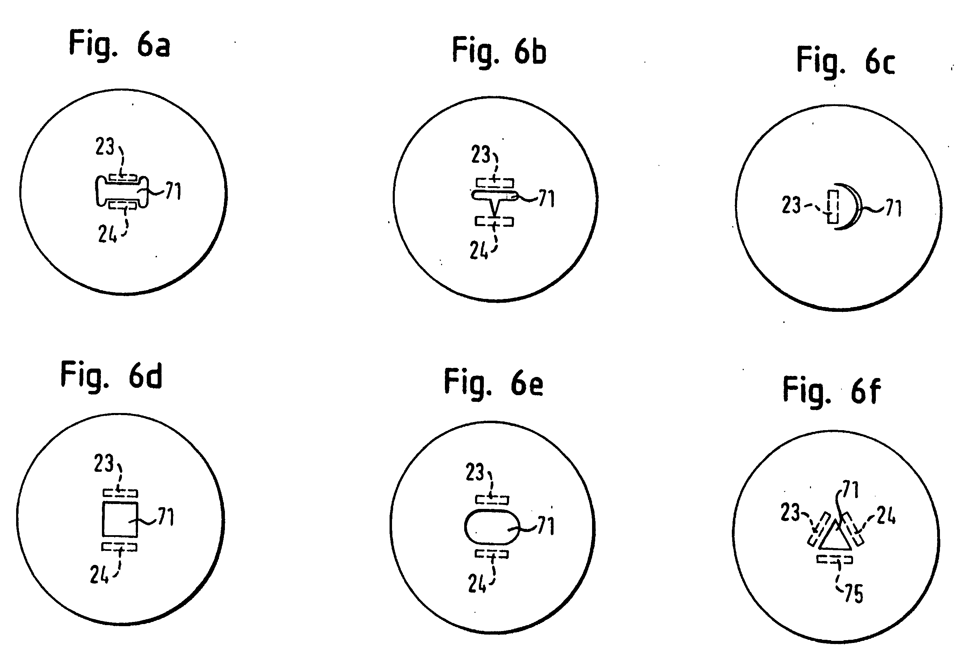

In den Fig. 6a bis 6g sind verschiedene Zuschnitte der Gewebelage 32, die die Vorderwand 11 bildet, dargestellt sowie die Lage der Fangbänder 23, 24. Die Öffnungen werden im übrigen im aufgeblasenen Zustand wesentlich kleiner sein als bei den gezeigten Zuschnitten.

In Fig. 6a ist eine H-förmige Öffnung 71 dargestellt, von der aus die Einbuchtung nach innen verläuft.

Bei der Ausführungsform nach Fig. 6b ist eine T-förmige Öffnung 71 vorgesehen.

Fig. 6c zeigt eine C-förmige Öffnung 71, die gegebenenfalls auch nur durch ein Fangband 23 geschlossen werden kann.

Bei der Ausführungsform nach Fig. 6d ist eine quadratische Öffnung 71 vorgesehen, und bei der Ausführungsform nach Fig. 6e eine ovale Öffnung 71. Fig. 6f zeigt eine dreieckige Öffnung 71 und drei Fangbänder 23, 24, 75, die 120 ° zueinander angeordnet sind.

## Patentansprüche

1. Gassackmodul, mit einem Gassack (3), wobei die Außenkontur des Gassacks durch eine Gassackwand gebildet ist, die eine Vorderwand (11) zum Aufprall des Insassen und eine von der Vorderwand (11) ausgehende Einbuchtung (17) hat, welche **dadurch** gebildet ist, daß ein Zentrumsabschnitt (16) der Gassackwand beim Aufblasen an einer freien Bewegung gehindert und zurückgehalten wird, wobei der Gassack (3) um die Einbuchtung (17) herum eine ringförmige, mit Gas zu befüllende Kammer (18) aufweist,
**dadurch gekennzeichnet, daß**
wenigstens ein Fangband (23, 24, 75) nahe des Übergangs (27) von der Vorderwand (11) zur Einbuchtung (17) an der Gassackwand angreift, sich im wesentlichen längs der Einbuchtung (17) erstreckt und die Tiefe (T) der Einbuchtung (17) festlegt.

2. Gassackmodul nach Anspruch 1, **dadurch gekennzeichnet, daß** der die Einbuchtung (17) definierende Teil der Gassackwand (25, 36, 38) so weit ausbaucht, daß Abschnitte (26) der Gassackwand einander berühren.

3. Gassackmodul nach Anspruch 2, **dadurch gekennzeichnet, daß** die einander berührenden Abschnitte (26) so aneinander anliegen, daß die Einbuchtung (17) geschlossen ist.

4. Gassackmodul nach Anspruch 3, **dadurch gekennzeichnet, daß** die Einbuchtung (17) nahe des Übergangs (27) zur Vorderwand (11) geschlossen ist.

5. Gassackmodul nach einem der vorhergehenden Ansprüche, **dadurch gekennzeichnet, daß** das Fangband (23, 24, 75) an der Vorderwand (11) oder an dem die Einbuchtung (17) definierenden Teil der Gassackwand befestigt ist.

6. Gassackmodul nach Anspruch 5, **dadurch gekennzeichnet, daß** die die Vorderwand (11) und die die Einbuchtung (17) definierende Gassackwand aus miteinander vernähten Gewebelagen (30, 32, 36, 38) besteht und daß das Fangband (23, 24) an der Naht (51), mit der die Gewebelagen der Vorderwand (11) und der Einbuchtung (27) verbunden sind, am Gassack befestigt ist.

7. Gassackmodul nach Anspruch 5, **dadurch gekennzeichnet, daß** die die Vorderwand (11) und die die Einbuchtung (17) definierende Gassackwand aus miteinander vernähten Gewebelagen (30, 32, 36, 38) besteht und daß die Gewebelage (32) der Vorderwand (11) zur Bildung des Übergangs (27) zur Einbuchtung (17) eine Öffnung (71) aufweist und wenigstens ein in die Öffnung ragender Gewebelappen (34) zur Befestigung des Fangbands (23) vorgesehen ist.

8. Gassackmodul nach einem der vorhergehenden Ansprüche, **dadurch gekennzeichnet, daß** mehrere Fangbänder (23, 24, 75) vorgesehen sind, die an der Vorderwand (11) befestigt sind und deren Befestigungsstellen (51) an der Vorderwand (11) im aufgeblasenen Zustand des Gassacks eine Ebene (E) definieren, wobei der Abschnitt (57) der Gassackwand einwärts der Befestigungsstellen (51) in der Ebene (E) liegt oder in Richtung entgegensetzt zur Einbuchtung (17) nach außen aus der Ebene (E) herausragt.

9. Gassackmodul nach einem der vorhergehenden Ansprüche, **dadurch gekennzeichnet, daß** die die Vorderwand (11) und die die Einbuchtung (17) definierende Gassackwand aus miteinander vernähten Gewebelagen (30, 32, 36, 38) besteht und daß zur Bildung des Übergangs (27) zur Einbuchtung die die Vorderwand (11) bildende Gewebelage (32) eine C-förmige, schlitzartige Öffnung, eine rechteckige, eine dreiecksförmige, eine ovale, eine kreuzförmige, eine T- oder H-förmige Öffnung aufweist.

10. Gassackmodul nach einem der vorhergehenden Ansprüche, **dadurch gekennzeichnet, daß** das Fangband (23, 24, 75) mit seinem dem Gassackmodul näheren Ende am Zentrumsabschnitt (16) befestigt ist.

## Claims

1. A gas bag module, comprising a gas bag (3), the outer contour of the gas bag being defined by a gas bag wall which has a front wall (11) for the impact of the occupant and an indentation (17) which proceeds from the front wall (11) and which is formed in that during inflation a center portion (16) of the gas bag wall is prevented from freely moving and is restrained, the gas bag (3) having around the indentation (17) a ring-shaped chamber (18) to be filled with gas,
**characterized in that**
at least one limiting strap (23, 24, 75) engages the gas bag wall close to the transition (27) from the front wall (11) to the indentation (17), extends substantially along the indentation (17) and determines the depth (T) of the indentation (17).

2. The gas bag module as claimed in claim 1, **characterized in that** the part of the gas bag wall (25, 36, 38) defining the indentation (17) bulges to such an extent that portions (26) of the gas bag wall contact each other.

3. The gas bag module as claimed in claim 2, **characterized in that** the portions (26) contacting each other rest against each other such that the indentation (17) is closed.

4. The gas bag module as claimed in claim 3, **characterized in that** the indentation (17) is closed in the vicinity of the transition (27) to the front wall (11).

5. The gas bag module as claimed in any of the preceding claims, **characterized in that** the limiting strap (23, 24, 75) is attached to the front wall (11) or to the part of the gas bag wall defining the indentation (17).

6. The gas bag module as claimed in claim 5, **characterized in that** the gas bag wall defining the front wall (11) and the indentation (17) consist of fabric layers (30, 32, 36, 38) sewn to each other, and that the limiting strap (23, 24) is attached to the gas bag at the seam (51) connecting the fabric layers of the front wall (11) and of the indentation (17).

7. The gas bag module as claimed in claim 5, **characterized in that** the gas bag wall defining the front wall (11) and the indentation (17) consist of fabric layers (30, 32, 36, 38) sewn to each other, and that the fabric layer (32) of the front wall (11) has an opening (71) for forming the transition (27) to the indentation (17), and at least one fabric tab (34) protruding into the opening is provided for the attachment of the limiting strap (23).

8. The gas bag module as claimed in any of the preceding claims, **characterized in that** a plurality of limiting straps (23, 24, 75) are provided, which are attached to the front wall (11) and whose points of attachment (51) at the front wall (11) define a plane (E) in the inflated condition of the gas bag, the portion (57) of the gas bag wall located inwards of the points of attachment (51) lying in the plane (E) or protruding outwards from the plane (E) in a direction opposite to the indentation (17).

9. The gas bag module as claimed in any of the preceding claims, **characterized in that** the gas bag wall defining the front wall (11) and the indentation (17) consist of fabric layers (30, 32, 36, 38) sewn to each other, and that for forming the transition (27) to the indentation the fabric layer (32) forming the front wall (11) has a C-shaped, slot-like opening, a rectangular, triangular, oval, cross-shaped, T-shaped or H-shaped opening.

10. The gas bag module as claimed in any of the preceding claims, **characterized in that** the limiting strap (23, 24, 75) is attached to the center portion (16) by its end that is closer to the gas bag module.

## Revendications

1. Module de coussin à gaz, comportant un coussin à gaz (3), le contour extérieur du coussin à gaz étant formé par une paroi de coussin à gaz qui a une paroi antérieure (11) destinée à l'impact de l'occupant et une indentation partant de la paroi antérieure (11) et formée par le fait qu'un tronçon central (16) de la paroi de coussin à gaz est empêché de faire un mouvement libre lors du gonflage et est retenu, le coussin à gaz (3) présentant autour de l'indentation (17) une chambre (18) annulaire à remplir de gaz,
**caractérisé en ce que**
au moins une bande de garde (23, 24, 75) s'engage sur la paroi du coussin à gaz à proximité de la transition (27) depuis la paroi antérieure (11) vers l'indentation (17), s'étend sensiblement le long de l'indentation (17) et détermine la profondeur (T) de l'indentation (17).

2. Module de coussin à gaz selon la revendication 1, **caractérisé en ce que** la partie de la paroi de coussin à gaz (25, 36, 38), qui définit l'indentation (17), s'évase autant que des tronçons (26) de la paroi de coussin à gaz se touchent.

3. Module de coussin à gaz selon la revendication 2, **caractérisé en ce que** les tronçons (26) qui se touchent sont en appui l'un sur l'autre de telle sorte que l'indentation (17) est fermée,

4. Module de coussin à gaz selon l'une des revendications 3, **caractérisé en ce que** l'indentation (17) est fermée à proximité de la transition (27) vers la paroi antérieure (11).

5. Module de coussin à gaz selon l'une des revendications précédentes, **caractérisé en ce que** la bande de garde (23, 24, 75) est fixée sur la paroi antérieure (11) ou sur la partie de la paroi de coussin à gaz qui définit l'indentation (17).

6. Module de coussin à gaz selon la revendication 5, **caractérisé en ce que** la paroi de coussin à gaz définissant la paroi antérieure (11) et l'indentation (17) est constituée par des couches de tissu (30, 32, 36, 38) cousues les unes aux autres, et **en ce que** la bande de garde (23, 24), par laquelle sont reliées les couches de tissu de la paroi antérieure (11) et de l'indentation (17), est fixée sur le coussin à gaz.

7. Module de coussin à gaz selon la revendication 5, **caractérisé en ce que** la paroi de coussin à gaz définissant la paroi antérieure (11) et l'indentation (17) est constituée par des couches de tissu (30, 32, 36, 38) cousues les unes aux autres, et **en ce que** la couche de tissu (32) de la paroi antérieure (11) présente une ouverture (71) pour former la transition (27) vers l'indentation (17) et il est prévu au moins une patte de tissu (34) faisant saillie dans l'ouverture pour fixer la bande de garde (23).

8. Module de coussin à gaz selon l'une des revendications précédentes, **caractérisé en ce qu'**il est prévu plusieurs bandes de garde (23, 24, 75) qui sont fixées sur la paroi antérieure (11) et dont les points de fixation (51) sur la paroi antérieure (11) définissent un plan (E) à l'état de gonflage du coussin à gaz, le tronçon (57) de la paroi de coussin à gaz, situé en dedans des points de fixation (51), se trouvant dans un plan (E) ou faisant saillie vers l'extérieur hors du plan (E) en direction opposée à l'indentation (17).

9. Module de coussin à gaz selon l'une des revendications précédentes, **caractérisé en ce que** la paroi de coussin à gaz définissant la paroi antérieure (11) et l'indentation (17) est constituée par des couches de tissu (30, 32, 36, 38) cousues les unes aux autres, et **en ce que** pour former la transition (27) vers l'indentation, la couche de tissu (32) formant la paroi antérieure (11) présente une ouverture en forme de C à la manière d'une fente, une ouverture rectangulaire ou triangulaire, ovale ou cruciforme ou en forme de T ou de H.

10. Module de coussin à gaz selon l'une des revendications précédentes, **caractérisé en ce que** la bande de garde (23, 24, 75) est fixée au tronçon central (16) par son extrémité la plus proche du module de coussin à gaz.
